# EUROPÄISCHE PATENTANMELDUNG

(11) **EP 2 045 908 A2**
(43) Veröffentlichungstag der Anmeldung: **08.04.2009**
(21) Anmeldenummer: 08017233.1
(22) Anmeldetag: 30.09.2008
(51) Int. Cl.: H02P 6/18

(54) **Einrichtung zur Regelung eines Elektromotors**

(30) Priorität: 01.10.2007 DE 202007013726 U
(71) Anmelder: Liebherr-Hausgeräte Ochsenhausen GmbH, 88416 Ochsenhausen (DE)
(72) Erfinder: Gerner, Herbert, 88416 Erlenmoos (DE); Luksch, Thomas, 89299 Unterroth (DE); Winter, Andreas, 87743 Egg an der Günz (DE)
(74) Vertreter: Herrmann, Uwe

(57) **Zusammenfassung**

Die vorliegende Erfindung betrifft eine Einrichtung zur Regelung eines Elektromotors, insbesondere eines bürstenlosen Gleichstrommotors, mit Antriebsmitteln zur Erzeugung eines Antriebspulses, mit Entmagnetisierungsmitteln zur Erzeugung eines Entmagnetisierungspulses, mit Erfassungsmitteln zur Erfassung der induzierten Motorrückspannung, mit Messmitteln zur Messung der Zeitspanne (tx₁) zwischen dem Ende der Entmagnetisierung und dem Erreichen der Totpunktstellung des Rotors des Elektromotors sowie mit einem Regler, mittels dessen auf der Grundlage der gemessenen Zeitspanne (tx₁) sowie einer Solldrehzahl die Dauer des nächsten Antriebspulses (tp₂) bestimmt wird.

## Beschreibung

Die vorliegende Erfindung betrifft eine Einrichtung zur Regelung eines Elektromotors, insbesondere zur Regelung eines bürstenlosen Gleichstrommotors.

Aus dem Stand der Technik sind Kühl- und/oder Gefriergeräte mit einem Ventilator bekannt, der in der Regel dazu dient, eine Luftumwälzung innerhalb des oder der Kompartimente des Gerätes hervorzurufen, um eine gleichmäßige Temperaturverteilung im Kühl- bzw. Gefrierraum oder auch Temperaturunterschiede zwischen unterschiedlichen Kompartimenten des Gerätes zu erzielen bzw. aufrechtzuhalten. Die bekannten Ventilatoren sind sowohl als DC-Ausführungen als auch als Ausführungen bekannt, die direkt an Netzspannung angeschlossen werden können.

Die Lageerkennung des Rotors, der im Allgemeinen als Permanentmagnet ausgeführt ist, erfolgt bei aus dem Stand der Technik bekannten Lösungen häufig über einen auf der Ansteuerelektronik befindlichen Hall-Sensor, der das Magnetfeld des Rotors detektiert und entsprechende Signale abgibt bzw. deren Rückführung veranlasst. Entsprechend der Lage des Rotors erfolgt die Ansteuerung der Spulen über die Elektronik des Ventilators.

Neben Gleichstrom-Ausführungen sind Ausführungen bekannt, die auf einem Spaltpolmotor basieren und bei denen es sich in der Regel um AC-Ausführungen, d. h. mit Wechselstrom betriebene Ventilatoren handelt. Unabhängig davon, ob es sich um eine AC- oder DC-Anschlussspannung handelt, erfolgt die Ansteuerung derartiger Ventilatoren immer aus einer DC-Spannung heraus, was bedeutet, dass den AC-Versionen ein entsprechendes Netzteil vorgeschaltet ist. Derartige Spaltpolmotoren weisen ebenfalls einen Permanentmagnet-Rotor, ein Blechpaket, eine Spule und eine Elektronik zur Motoransteuerung aus. Die Lageerkennung zur Erfassung der Lage des Rotors erfolgt in der Regel ebenfalls über einen Hall-Sensor. In der Regel ist nur ein Spulenkörper vorhanden, d.h. die räumlich um 90° versetzte Anordnung der Spulen zueinander ist bei einem Spaltpolschnitt im allgemeinen nicht vorhanden.

Vorbekannten Ausgestaltungen haftet der Nachteil an, dass die empfindlichen Elektronikkomponenten zumindest teilweise in Bereichen angeordnet sind, in denen vergleichsweise schwierige Bedingungen herrschen. Ein Beispiel ist ein in einem No-Frost-Kühl- bzw. Gefriergerät angeordneter Ventilator. Will man eine zuverlässige Betriebsweise des Gerätes sicherstellen, ist somit der Einsatz besonders zuverlässiger und robuster Elektronikkomponenten erforderlich, was mit Kostennachteilen verbunden sein kann.

Der vorliegenden Erfindung liegt daher die Aufgabe zugrunde, ein Kühl- und/oder Gefriergerät der eingangs genannten Art dahingehend weiterzubilden, dass das Erfordernis der Anordnung empfindlicher Elektronikkomponenten bei schwierigen Umgebungsbedingungen nicht zwingend erforderlich ist.

Diese Aufgabe wird durch eine Einrichtung mit den Merkmalen des Anspruchs 1 gelöst.

Die Erfindung betrifft eine Einrichtung zur Regelung eines Elektromotors, insbesondere eines bürstenlosen Gleichstrommotors und insbesondere zur Regelung eines Ventilatormotors eines Kühl- und/oder Gefriergerätes. Die Einrichtung umfaßt Antriebsmittel zur Erzeugung eines Antriebspulses, Entmagnetisierungsmittel zur Erzeugung eines Entmagnetisierungspulses, Erfassungsmittel zur Erfassung der induzierten Motorrückspannung, Messmittel zur Messung der Zeitspanne zwischen dem Ende der Entmagnetisierung und dem Erreichen der Totpunktstellung des Rotors des Elektromotors sowie einen Regler, mittels dessen auf der Grundlage der gemessenen Zeitspanne oder einer auf deren Grundlage ermittelten Istdrehzahl sowie einer Solldrehzahl die Dauer des nächsten Antriebspulses bestimmt wird.

Erfindungsgemäß ist somit vorgesehen, dass die Zeitspanne zwischen dem Ende des Entmagnetisierungspulses und dem Zeitpunkt gemessen wird, zu dem sich der Rotor am Totpunkt befindet. Auf dieser Grundlage wird sodann die Berechnung der Pulslänge des nächsten Antriebspulses vorgenommen.

Denkbar ist es, dass aus der Zeitdauer des Antriebspulses, der Zeitdauer des Entmagnetisierungspulses in Gegenrichtung und der genannten Zeitspanne zwischen dem Ende der Entmagnetisierung und dem Erreichen der Totpunktstellung die Istdrehzahl bestimmt wird. Diese wird sodann mit einer Solldrehzahl verglichen und darauf basierend die Pulslänge des nächsten Antriebspulses bestimmt.

Vorzugsweise ist vorgesehen, dass die Einrichtung eine H-Brücke aufweist, mittels derer von dem Antriebspuls auf den Entmagnetisierungspuls in Gegenrichtung umschaltbar ist.

Die Erfassungsmittel zur Erfassung der induzierten Motorrückspannung können als Komparator, insbesondere als Analog-Komparator ausgeführt sein.

In einer bevorzugten Ausgestaltung der Erfindung ist vorgesehen, dass bei Erkennen des Nulldurchgangs einer ersten Flanke der induzierten Motorspannung die Entmagnetisierung der Motorwicklung beendet wird. Die Einrichtung kann somit derart ausgeführt sein, dass der Entmagnetisierungspuls abgeschaltet wird, wenn mittels der Erfassungsmittel erfaßt wird, dass die induzierte Motorspannung einen Nulldurchgang aufweist.

In weiterer Ausgestaltung der Erfindung ist vorgesehen, dass die Einrichtung derart ausgeführt ist, dass die Totpunktstellung dadurch erkannt wird, dass die induzierte Motorspannung einen Grenzwert erreicht, vorzugsweise einen Grenzwert unterschreitet. Bei Erkennen des Nulldurchgangs einer zweiten Flanke der induzierten Motorspannung kann somit auf das Erreichen der Totpunktstellung des Rotors geschlossen werden.

In weiterer Ausgestaltung der Erfindung ist vorgesehen, dass die Einrichtung derart ausgeführt ist, dass nach Ablauf der Zeitspanne bis zum Erreichen der Totpunktstellung des Rotors des Elektromotors eine Kommutierung der Motorwicklung erfolgt, was zur Folge hat, dass der Antrieb des Motors jeweils intervallweise in Gegenrichtung erfolgt.

In weiterer Ausgestaltung der Erfindung ist vorgesehen, dass zunächst ein Initialisierungspuls zum Ausrichten des Rotors in Grundstellung aufgegeben wird.

So dann kann vorgesehen sein, dass nach dem ersten Antriebspuls, der vorzugsweise eine Dauer von < 180° aufweist, in den Regelmodus gewechselt wird, in dem mittels des Reglers die Bestimmung der Dauer der jeweiligen Antriebspulse bestimmt wird.

Bei dem Regler kann es sich beispielsweise um einen PI-Regler handeln.

Vorzugsweise ist vorgesehen, dass die Einrichtung keinen Sensor zur Erfassung der Position des Rotors und/oder keinen Drehzahlsensor umfaßt. Erfindungsgemäß kann die Motordrehzahl bzw. die Bestimmung der Rotorposition auch ohne einen Sensor, wie er aus dem Stand der Technik bekannt ist, erfolgen. Damit ist es beispielsweise möglich, einen Ventilator eines Kühl- und/oder Gefriergerätes zu betreiben, ohne dass die Anordnung kritischer elektronischer Bauelemente in schwierigen Umgebungsbedingungen zwingend erforderlich ist, wenngleich deren Anordnung in diesen Bereichen erfindungsgemäß auch nicht ausgeschlossen ist.

Die Erfindung betrifft des weiteren eine Vorrichtung mit wenigstens einer Einrichtung nach einem der Ansprüche 1 bis 11 sowie wenigstens einen mit dieser in Verbindung stehenden Elektromotor. Der Elektromotor kann beispielsweise durch einen Elektromotor zum Antrieb eines Ventilators, vorzugsweise zum Antrieb eines Ventilators dienen. Denkbar ist es, dass es sich bei dem Ventilator um einen Ventilator eines No-Frost-Verdampfers handelt.

Die Erfindung betrifft des weiteren ein Kühl- und/oder Gefriergerät mit einer oder mehreren Einrichtungen gemäß einem der Ansprüche 1 bis 11 oder mit wenigstens einer Vorrichtung nach einem der Ansprüche 12 bis 14.

Dabei ist vorzugsweise vorgesehen, dass die Einrichtung bzw. die Vorrichtung auf derselben Platine wie die Gerätesteuerung des Gerätes angeordnet ist oder durch die Gerätesteuerung gebildet wird.

Weitere Einzelheiten und Vorteile der Erfindung werden anhand eines in der Zeichnung dargestellten Ausführungsbeispiels näher erläutert. Es zeigen:
- Figur 1:: eine schematische Ansicht einer Motorantriebsschaltung mit H-Brücke,
- Figur 2:: eine schematische Darstellung der Ansteuerung des Brückentreibers,
- Figur 3:: eine schematische Darstellung der Erfassung der Motor-Rückspannung,
- Figur 4:: eine schematische Darstellung der Erfassung der Motor-Rückspannung zur Erfassung der Zeitspanne tx und
- Figur 5,6:: eine schematische Darstellung des Initialisierungspulses zum Ausrichten des Rotors in Grundstellung mit Wechsel in den Regelmodus nach dem 1. Anlaufpuls.

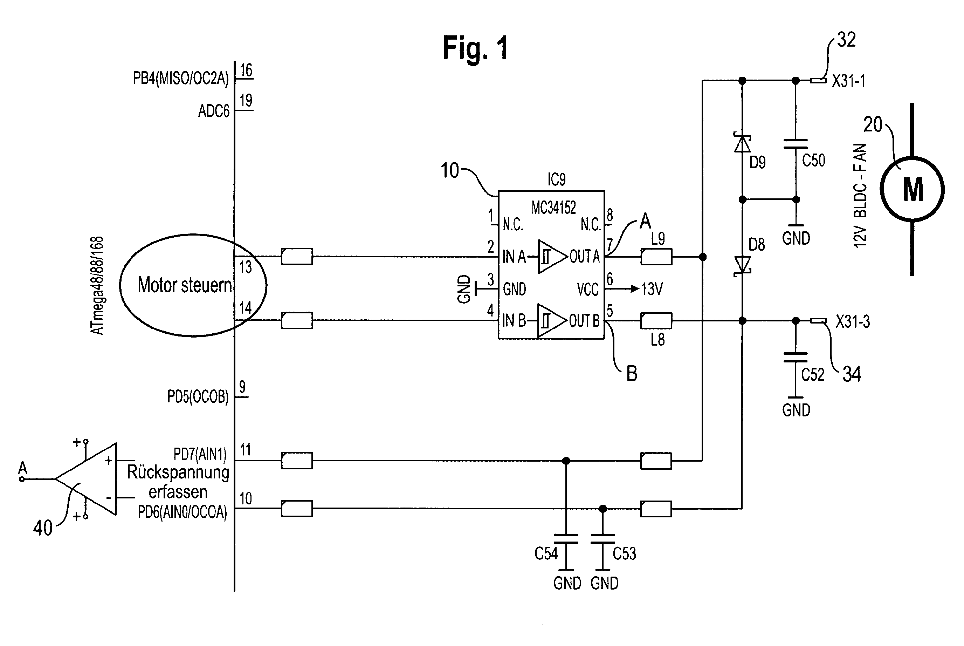

Figur 1 zeigt den H-Brückentreiber 10 als Bestandteil einer elektronischen Schaltung zum Antrieb des Motors 20. Bei dem Motor handelt es sich entsprechend dem dargestellten Ausführungsbeispiel um einen sensorlosen 1-phasen Motor. Der Motor 20 ist als bürstenloser Gleichstrommotor ausgeführt.

Der H-Brückentreiber 10 weist Ports A und B auf, mittels derer je nach Ansteuerpulsen eine Kommutierung der Motorwicklung des Motors 20 erfolgt.

Die Bezugszeichen 32, 34 kennzeichnen die jeweils mit den Ports A, B in Verbindung stehenden Anschlüsse des Motors 20, der in dem hier dargestellten Beispiel als 12 V Gleichstrommotor ausgeführt ist.

Mit dem Bezugszeichen 40 ist ein Analog-Komparator gekennzeichnet, der mit dem Motor 20 bzw. mit dessen Anschlussleitungen in Verbindung steht. Der Komparator 40 erfasst die induzierte Motorspannung bzw. deren Nulldurchgang.

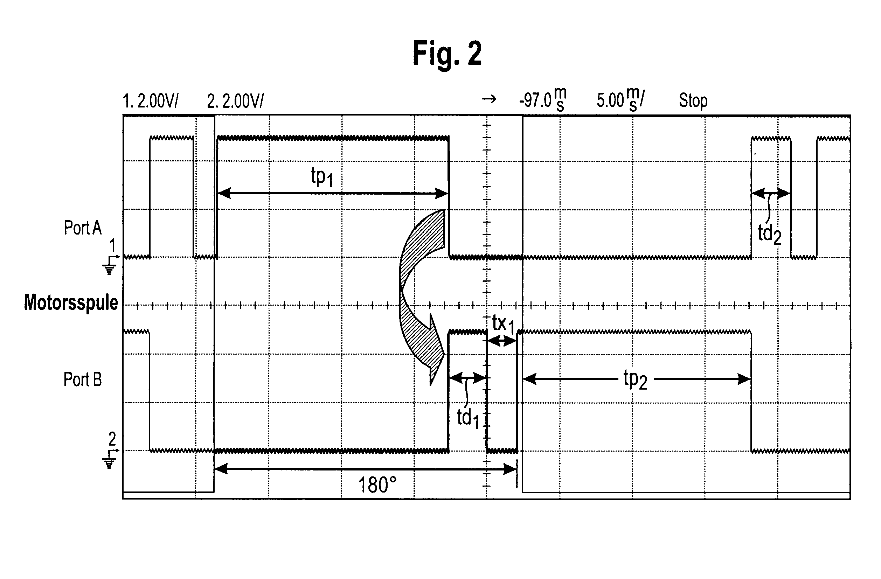

Erfindungsgemäß ist vorgesehen, dass die Motorwicklung zunächst in eine Richtung bestromt wird, wie dies aus Figur 2 hervorgeht. Diese Figur zeigt den Antriebspuls der Länge < 180°. Der Antriebspuls ist mit dem Bezugszeichen tp₁ dargestellt. Wie dies aus Figur 2 hervorgeht liegt der Antriebspuls an Port A an.

Während der Zeitspanne tp₁ wird der Motor 20 bzw. dessen Wicklung somit in einer Richtung bestromt.

Der Wert 180° bestimmt sich aus der bekannten Solldrehzahl des Motors 20. Die Länge des ersten Antriebspulses wird beispielsweise aufgrund empirischer Daten gewählt.

Wie dies weiter aus Figur 2 hervorgeht, folgt auf den Antriebspuls ein Entmagnetisierungspuls in Gegenrichtung. Die Zeitspanne, in der der Entmagnetisierungspuls aufrechterhalten wird, ist in Figur 2 mit dem Bezugszeichen td₁ dargestellt.

Der Entmagnetisierungspuls wird solange aufrechterhalten, bis seitens des Komparators 40 eine Änderung der Stromrichtung bzw. ein Nulldurchgang der induzierten Spannung ermittelt wird.

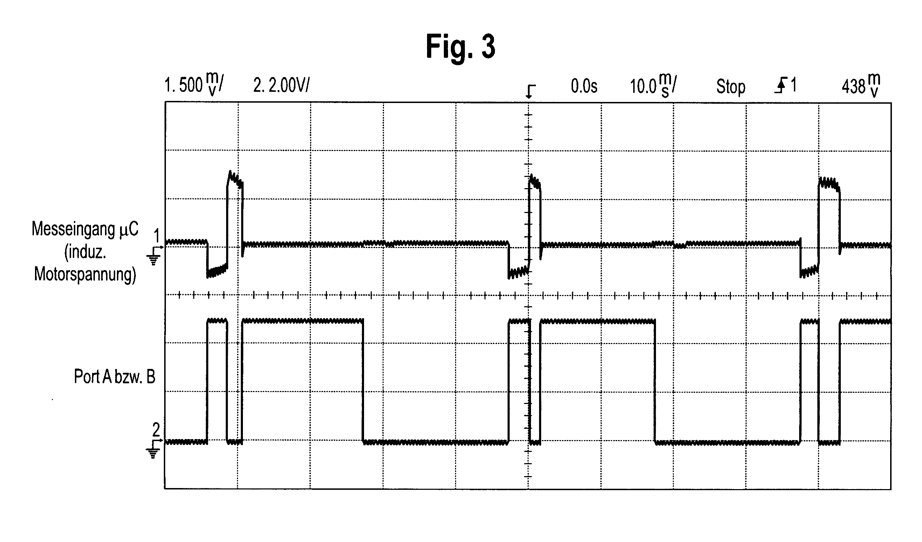

Figur 3 zeigt den Verlauf der induzierten Motorspannung sowie den an Port A bzw. Port B anliegenden Spannungswert.

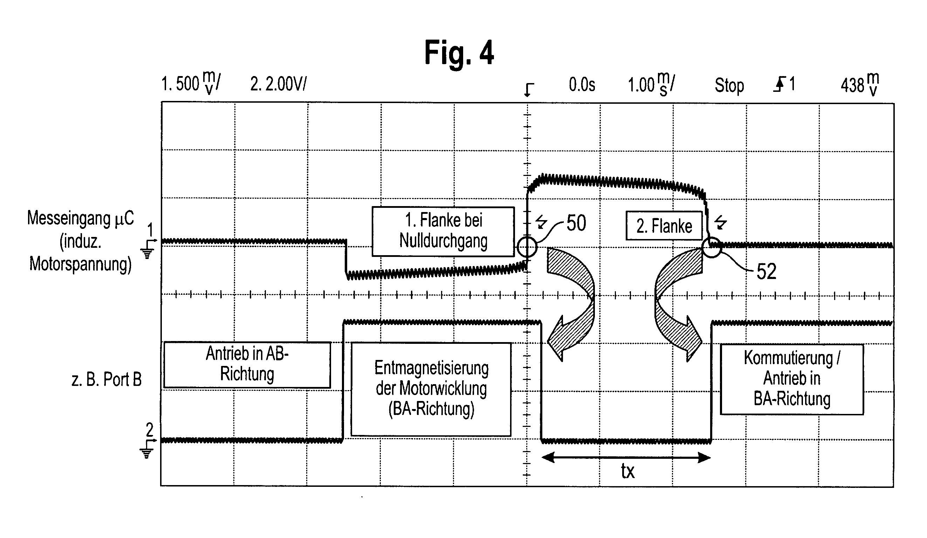

Figur 3 verdeutlicht, das die induzierte Motorspannung einen Nulldurchgang erfährt, der in Figur 4 mit dem Bezugszeichen 50 gekennzeichnet ist. Dieser wird von dem Komparator 40 erfasst und dient als Signal zum Beenden des Entmagnetisierungspulses. Wird der Nulldurchgang festgestellt, wird der Entmagnetisierungspuls durch entsprechende Schaltung des H-Brückentreibers 10 abgeschaltet, d.h. das Entmagnetisierungsintervall td₁ beendet.

Mit Abschluß der Entmagnetisierung beginnt die Messung des sich anschließenden Intervalls tx₁. Während des Intervalls tx₁ fließt kein Strom und es erfolgt die Zeitmessung in dieser Leerlaufphase solange, bis sich der Rotor am Totpunkt befindet.

Die Ermittlung des Totpunktes erfolgt mittels des Komparators 40 bei Erreichen eines bestimmten Grenzwertes, beispielsweise des Wertes Null der induzierten Motorspannung. Dieser Zeitpunkt ist in Figur 4 mit dem Bezugszeichen 52 gekennzeichnet.

Im Anschluß daran erfolgt die Kommutierung der Motorwicklung und der Antrieb in Gegenrichtung zu dem vorhergehenden Intervall. Dies ist in Figur 4 mit dem Vermerk "Kommutierung/Antrieb in BA-Richtung" gekennzeichnet.

Auf der Grundlage der Werte tp₁, td₁ und tx₁ wird die Ist-Drehzahl des Motors ermittelt und kann einer Auswertung unterzogen werden. Erfindungsgemäß ist vorgesehen, dass die Antriebspulslänge des kommenden Intervalls mittels eines PI-Algorithmus bzw. mittels eines PI-Reglers berechnet wird.

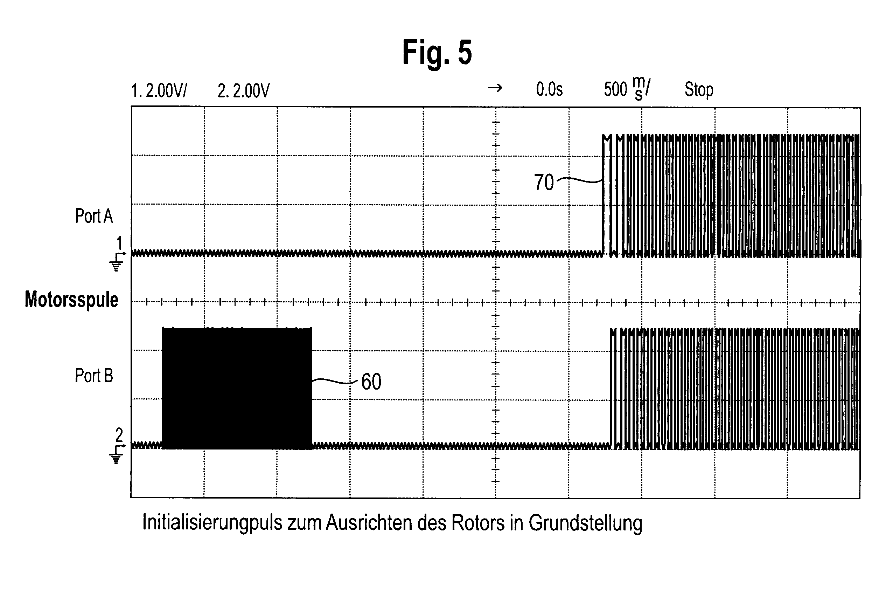

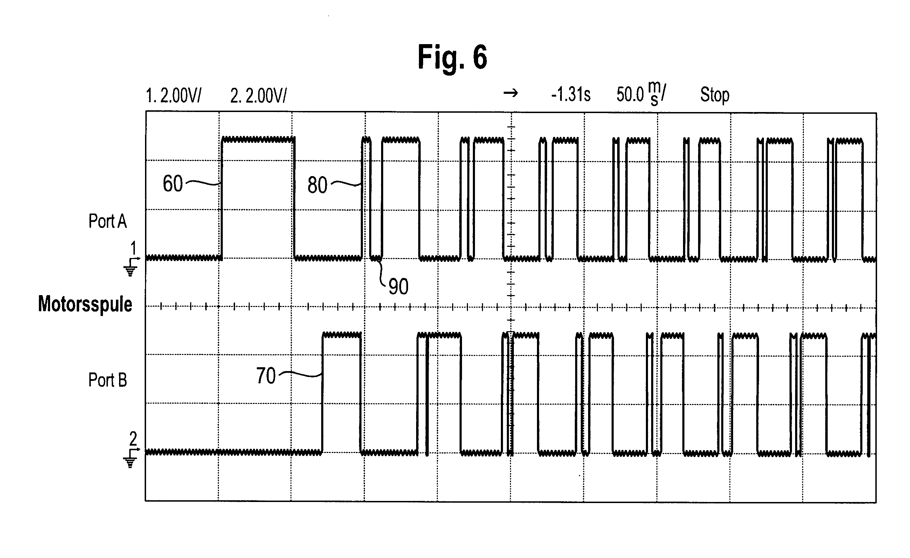

Figur 5 zeigt mit dem Bezugszeichen 60 einen an Port B angelegten Initialisierungspuls zum Ausrichten des Rotors in die Grundstellung sowie sich die daran anschließende Motorregelung gemäß der vorliegenden Erfindung. Aus Figur 6 geht ebenfalls mit dem Bezugszeichen 60 der Initialisierungspuls hervor. Figur 6 zeigt ferner, dass nach dem ersten Anlaufpuls 70 in den Regelmodus mit Auswertung der Gegenspannung übergegangen wird.

Auf den Anlaufpuls 70 folgt der Entmagnetisierungspuls 80 in Gegenrichtung sowie daran anschließend das Zeitintervall tx₁, das mit dem Bezugszeichen 90 gekennzeichnet ist. Aufgrund der anschließenden Kommutierung wird in dem folgenden Intervall Port A bestromt, die Entmagnetisierung mittels Port B vorgenommen und sodann erneut die Zeitspanne txₙ zwischen den Zeitpunkten 50 und 52 gemäß Figur 4 vorgenommen.

Die erfindungsgemäße Motorregelung ermöglicht den Wegfall eines Sensors, beispielsweise eines Hallsensors am Motor. Ferner ist es erfindungsgemäß möglich, auf eine zusätzliche Elektronik zur Ventilatorsteuerung zu verzichten und diese in die Gerätesteuerung mit zu integrieren.

In bevorzugter Ausgestaltung der Erfindung kann ein Blockieren und/oder eine Drehzahländerung erfasst und ausgewertet werden. Auch ist eine Einstellung der Drehzahl möglich. In weiterer Ausgestaltung der Erfindung kann vorgesehen sein, dass die Drehrichtung einstellbar ist.

## Patentansprüche

1. Einrichtung zur Regelung eines Elektromotors (20), insbesondere eines bürstenlosen Gleichstrommotors, mit Antriebsmitteln zur Erzeugung eines Antriebspulses, mit Entmagnetisierungsmitteln zur Erzeugung eines Entmagnetisierungspulses, mit Erfassungsmitteln zur Erfassung der induzierten Motorrückspannung, mit Messmitteln zur Messung der Zeitspanne (tx₁) zwischen dem Ende der Entmagnetisierung und dem Erreichen der Totpunktstellung des Rotors des Elektromotors sowie mit einem Regler, mittels dessen auf der Grundlage der gemessenen Zeitspanne (tx₁) sowie einer Solldrehzahl die Dauer des nächsten Antriebspulses (tp₂) bestimmt wird.

2. Einrichtung nach Anspruch 1, **dadurch gekennzeichnet, dass** die Einrichtung eine H-Brücke (10) aufweist, mittels derer von dem Antriebspuls auf den Entmagnetisierungspuls umschaltbar ist.

3. Einrichtung nach Anspruch 1 oder 2, **dadurch gekennzeichnet, dass** die Erfassungsmittel zur Erfassung der induzierten Motorrückspannung als Komparator (40), insbesondere als Analog-Komparator ausgeführt sind.

4. Einrichtung nach einem der vorhergehenden Ansprüche, **dadurch gekennzeichnet, dass** die Einrichtung derart ausgeführt ist, dass der Entmagnetisierungspuls abgeschaltet wird, wenn mittels der Erfassungsmittel ermittelt wird, dass die induzierte Motorspannung einen Nulldurchgang (50) aufweist.

5. Einrichtung nach einem der vorhergehenden Ansprüche, **dadurch gekennzeichnet, dass** die Einrichtung derart ausgeführt ist, dass die Totpunktstellung **dadurch** erkannt wird, dass die induzierte Motorspannung einen Grenzwert erreicht, vorzugsweise einen Grenzwert unterschreitet.

6. Einrichtung nach einem der vorhergehenden Ansprüche, **dadurch gekennzeichnet, dass** die Einrichtung derart ausgeführt ist, dass die Totpunktstellung des Rotors **dadurch** erkannt wird, dass die induzierte Motorspannung den Wert Null (52) erreicht.

7. Einrichtung nach einem der vorhergehenden Ansprüche, **dadurch gekennzeichnet, dass** die Einrichtung derart ausgeführt ist, dass nach Ablauf der Zeitspanne (txₙ) bis zum Erreichen der Totpunktstellung des Rotors des Elektromotors (20) eine Kommutierung der Motorwicklung erfolgt.

8. Einrichtung nach einem der vorhergehenden Ansprüche, **dadurch gekennzeichnet, dass** die Einrichtung derart ausgeführt ist, dass zunächst ein Initialisierungspuls (60) zum Ausrichten des Rotors in Grundstellung aufgegeben wird.

9. Einrichtung nach einem der vorhergehenden Ansprüche, **dadurch gekennzeichnet, dass** nach dem ersten Antriebspuls (70) in den Regelmodus gewechselt wird, in dem mittels des Reglers die Bestimmung der Dauer der Antriebspulse (tpₙ) bestimmt wird.

10. Einrichtung nach einem der vorhergehenden Ansprüche, **dadurch gekennzeichnet, dass** die Einrichtung keinen Sensor zur Erfassung der Position des Rotors aufweist.

11. Einrichtung nach einem der vorhergehenden Ansprüche, **dadurch gekennzeichnet, dass** es sich bei dem Regler um einen PI-Regler handelt.

12. Vorrichtung mit wenigstens einer Einrichtung nach einem der Ansprüche 1 bis 11 sowie mit wenigstens einem mit der Einrichtung in Verbindung stehenden Elektromotor (20).

13. Vorrichtung nach Anspruch 12, **dadurch gekennzeichnet, dass** es sich bei dem Elektromotor (20) um einen Einphasen-Motor handelt.

14. Vorrichtung nach Anspruch 12 oder 13, **dadurch gekennzeichnet, dass** es sich bei dem Elektromotor (20) um einen mit einem Ventilator zu dessen Antrieb in Verbindung stehenden Motor handelt.

15. Kühl- und/oder Gefriergerät mit einer oder mehreren Einrichtungen nach einem der Ansprüche 1 bis 11 oder mit einem oder mehreren Vorrichtungen nach einem der Ansprüche 12 bis 14.

16. Kühl- und/oder Gefriergerät nach Anspruch 15, **dadurch gekennzeichnet, dass** die Einrichtung bzw. die Vorrichtung auf derselben Platine wie die Gerätesteuerung des Gerätes angeordnet ist oder durch die Gerätesteuerung gebildet wird.

17. Kühl- und/oder Gefriergerät nach Anspruch 15 oder 16, **dadurch gekennzeichnet, dass** das Gerät wenigstens einen No-Frost-Verdampfer aufweist.
